# EUROPEAN PATENT SPECIFICATION

(11) **EP 3 367 311 B1**
(45) Date of publication and mention of the grant of the patent: **01.12.2021**
(21) Application number: 17201033.2
(22) Date of filing: 10.11.2017
(51) Int. Cl.: G06Q 10/06, G06Q 10/00, G06N 20/00

(54) **MACHINE LEARNING FOR PREVENTIVE ASSURANCE AND RECOVERY ACTION OPTIMIZATION**
MASCHINELLES LERNEN ZUR PRÄVENTIVEN ABSICHERUNG UND OPTIMIERUNG VON WIEDERHERSTELLUNGSMASSNAHMEN
APPRENTISSAGE MACHINE POUR L'ASSURANCE PRÉVENTIVE ET L'OPTIMISATION DES ACTIONS DE RÉCUPÉRATION

(30) Priority: 24.02.2017 US 201715441696
(43) Date of publication of application: 29.08.2018
(73) Proprietor: Accenture Global Solutions Limited, Dublin 4 (IE)
(72) Inventor: FIUMARA, Thomas, 20146 Milan (IT); GRIGOLETTI, Marco, 20159 Milano (IT); TRIPPUTI, Luigi, 20148 Milano (IT); CASTRIGNO, Marta, 70033 Corato (BA) (IT)
(74) Representative: Swindell & Pearson Limited

(56) References cited:
- EP-A1- 2 688 015
- WO-A1-2015/175255

## Description

### BACKGROUND

Machine learning is an innovative technology of data analysis that automates predictive model building and allows computer devices to discover insights without being explicitly programmed. Using automated and iterative algorithms, computing devices may employ machine learning to find high-order interactions and patterns within data. Such interactions patterns may be used to proactively identify and predict issues using information extracted from large amounts of data to enhance and extend current proactive processes.

EP 2 688 015 A1 discloses method and system for determining at least one combined forecast value of energy resources. An input/output interface receives an adaptively selected historical dataset and a current dataset from one or more predictive forecast models and/or measurements. An adaptive forecast module generates one or more variants of machine learning models to model the performance of the one or more predictive forecast models. The one or more variants of machine learning models are trained based upon the historical dataset. The adaptive forecast module correlates the current dataset with the historical dataset to obtain a filtered historical dataset. The adaptive forecast module evaluates the one or more variants of machine learning models on the filtered historical dataset. The adaptive forecast module derives a statistical model to determine the at least one combined forecast value by combining outputs obtained based on said evaluation.

WO2015175255 discloses a method that involves receiving a committed information rate prediction from a machine learning model. The committed information rate prediction corresponds to a predicted average traffic rate supported by a network connection. The traffic shaping strategy is adjusted based on the committed information rate prediction. The rate at which data is communicated over the network connection is based on the traffic shaping policy. The effect of the adjusted traffic shaping strategy is monitored.

### SUMMARY

Implementations of the present disclosure are generally directed to a predictive assurance solution. More particularly, implementations of the present disclosure are directed to a combination of machine learning algorithms and automatic recovery actions that automatically learn from experience as well as continuously evolve with received input, such as user behavior and device analytics, to determine a likelihood of an occurrence of an event(s) for a respective communication line.

According to the invention, actions include receiving behavior data and line parameter data from a plurality of user devices in real-time, each user device being associated with a respective communication line, processing the behavior data and line parameter data through a predictive model, the predictive model having been trained using a set of training data including previously received behavior data and previously received line parameter data, providing at least one risk score for each communication line based on the processing, each risk score representing a likelihood that a trouble ticket for the respective communication line would be opened within a determined temporal period, and selectively performing one or more recovery actions for a communication line based on a respective risk score, the one or more recovery actions being performed to inhibit opening of at least one trouble ticket.. Other implementations of this aspect include corresponding systems, apparatus, and computer programs, configured to perform the actions of the methods, encoded on computer storage devices.

These and other implementations include one or more of the following features: actions further include determining a result of the one or more recovery actions, and providing the result as feedback to the predictive model to determine subsequent risk scores for each respective communication line; the predictive model is trained to discover possible correlations between known issues and behaviors of parameters which initially are not considered to be relevant; actions further include generating a plurality of category risk scores representing a ticket category for each line, wherein the risk scores represent a likelihood that a trouble ticket will be open for line for the corresponding ticket category with the determined temporal period; the communication lines are ordered according to the respective risk scores, and wherein the recovery actions are selectively performed based on the respective risk score meeting a determined threshold; actions further include selecting the predictive model based on an analysis of various predictive models trained with the set of training data; the predictive model is tuned based on static modeling; the predictive model is tuned based on hierarchical temporal memory (HTM) modeling; the set of training data includes data received from one or more external sources, the one or more external sources including one or more of a trouble ticketing system, a network inventory system, and a network element system; and performing the one or more recovery actions for a communication line reduce the respective risk score.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors and a computer-readable storage medium coupled to the one or more processors having instructions stored thereon which, when executed by the one or more processors, cause the one or more processors to perform operations in accordance with implementations of the methods provided herein.

The details of one or more implementations of the present disclosure are set forth in the accompanying drawings and the description below. Other features and advantages of the present disclosure will be apparent from the description and drawings, and from the claims.

### BRIEF DESCRIPTION OF DRAWINGS

FIG. 1 depicts an example system that can execute implementations of the present disclosure.
FIG. 2 schematically depicts an example platform in accordance with implementations of the present disclosure
FIG. 3 depicts an example architecture in accordance with implementations of the present disclosure
FIG. 4 depicts an example process 400 that can be executed in implementations of the present disclosure

### DETAILED DESCRIPTION

As described in further detail herein, implementations of the present disclosure include receiving behavior data and line parameter data from a plurality of user devices in real-time, each user device being associated with a respective communication line, processing the behavior data and line parameter data through a predictive model, the predictive model having been trained using a set of training data including previously received behavior data and previously received line parameter data, providing at least one risk score for each communication line based on the processing, each risk score representing a likelihood that a trouble ticket for the respective communication line would be opened within a determined temporal period, and selectively performing one or more recovery actions for a communication line based on a respective risk score, the one or more recovery actions being performed to inhibit opening of at least one trouble ticket.

Implementations of the present disclosure will be described in further detail herein with reference to an example context. The example context includes automatic triggering of recovery actions to prevent or mitigate an occurrence of an event predicted for a respective communication line. The automatic triggering of recovery actions provides a shift from a bottom-up service monitoring approach to a "digital" view of the service as perceived by end users. For example, implementations of the present disclosure can be used to determine a likelihood of a particular user of a communication line issuing a trouble ticket, and mitigating potential issuance of the trouble ticket. Additionally, implementations of the present disclosure can be used to perform mitigation actions toward external systems in order to prevent communication line faults. It is contemplated, however, the implementations of the present disclosure can be realized in any appropriate context.

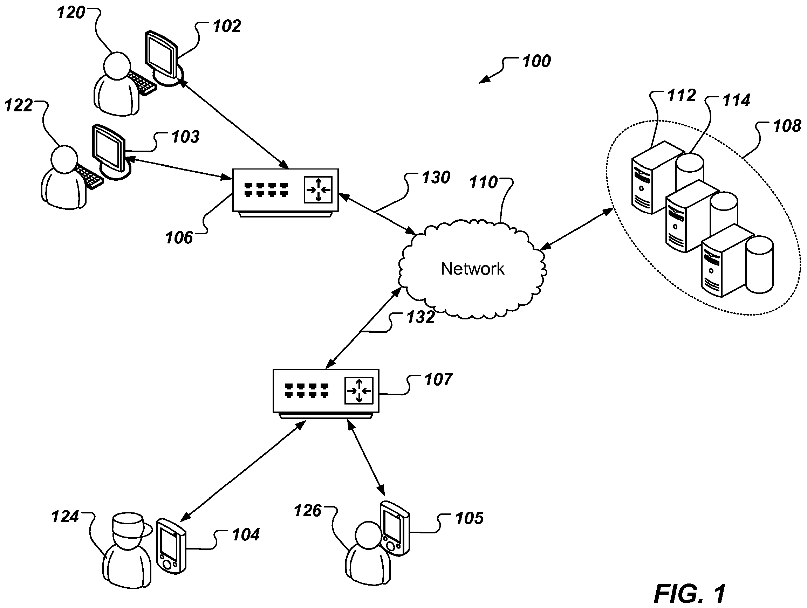

FIG. 1 depicts an example system 100 that can execute implementations of the present disclosure. The example system 100 includes computing devices 102, 103, 104, 105, 106, 107, a back-end system 108, communication lines 130, 132, and a network 110. In some examples, the network 110 includes a local area network (LAN), wide area network (WAN), the Internet, or a combination thereof, and connects web sites, devices (e.g., the computing device 102, 103, 104, 105) and back-end systems (e.g., the back-end system 108). In some examples, the computing devices 102, 103, 104, 105 connect to network 110 through customer premises equipment ("CPE") (e.g., the computing devices 106, 107). In some examples, CPE's 106 and 107 may be associated with a respective communication line or telecommunication channel (e.g., 130 or 132). In some examples, the network 110 can be accessed over a wired and/or a wireless communications link. For example, mobile computing devices, such as smartphones can utilize a cellular network to access the network 110.

In the depicted example, the back-end system 108 includes at least one server system 112, and data store 114 (e.g., database and knowledge graph structure). In some examples, the at least one server system 112 hosts one or more computer-implemented services that users can interact with using computing devices. In some examples, the CPE's 106 and 107 may send behavior and/or line parameter data to back-end system 108 via network 110.

In some examples, the CPEs 106 and 107 may enable users (e.g., uses 120, 122, 124, 126) to access communications service providers' services via respective communication lines 130, 132. Examples, CPEs include, but are not limited to, telephones, routers, switches, residential gateways ("RG"), set-top boxes, fixed mobile convergence products, home networking adapters, and Internet access gateways.

Communication lines 130, 132 include any appropriate type of medium to convey an information signal, for example a digital bit stream, from one or several senders (or transmitters) to one or several receivers. For example, communication lines 130, 132 may be physical transmission mediums, such as a wire, or logical connection over a multiplexed medium, such as a radio channel. Communication lines 130, 132 may have a certain capacity for transmitting information, often measured by its bandwidth in hertz or its data rate in bits per second.

In some examples, the computing devices 102, 103, 104, and 105 can each include any appropriate type of computing device such as a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices.

In some examples, the network 110 includes a local area network (LAN), wide area network (WAN), the Internet, or a combination thereof, and connects web sites, devices (e.g., the computing device 102, 104, 105, 106, 107), and back-end systems (e.g., the back-end system 108).

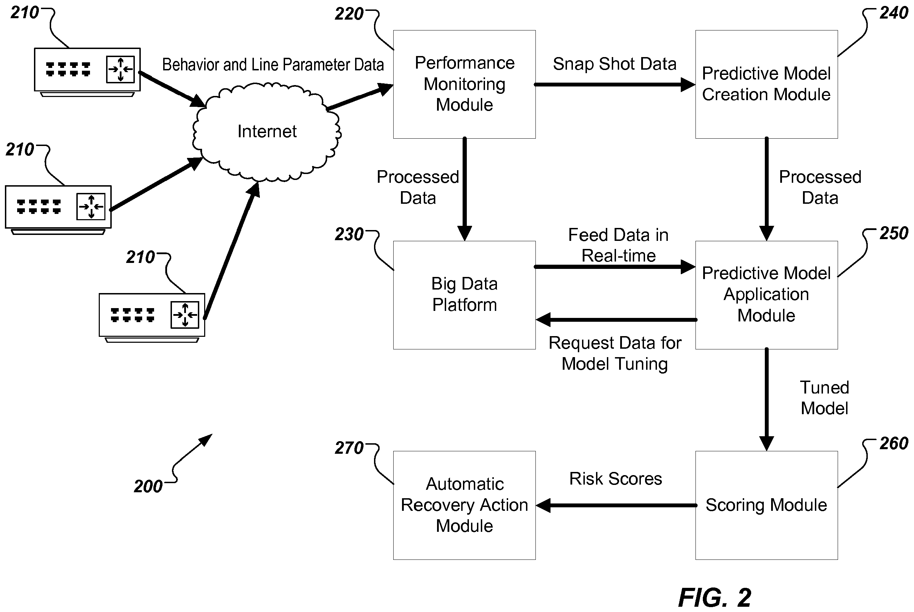

FIG. 2 schematically depicts an example platform 200 in accordance with implementations of the present disclosure. The example platform 200 includes user devices 210, performance monitoring module 220, big data platform 230, predictive model creation module 240, predictive model application module 250, scoring module 260, and automatic recovery action module 270. The described modules may be deployed as a service running on a server or as a distributed service running on multiple servers, such as back-end system 108 of FIG. 1, within a network, such as network 110 of FIG. 1. In some examples, the described modules may be provided as service through a cloud service provider or a combination of cloud resources and services deployed through servers within a network, such as network 100.

In the depicted example, user devices 210 transmit behavior and/or line parameter data to performance monitoring module 220 via the Internet or through a backend network. User devices 210 may be associated with a respective communication line (e.g., a telecommunication channel), such as communication lines 130, 132 of FIG 1., and include, for example, CPEs, such as CPEs 106, 107 of FIG. 1. Behavior data includes information regarding bandwidth usage, utilization timeframes, and threshold events. Line parameter data includes information regarding the respective communication line and devices that access the communication line. For example, line parameter data may include device availability, line availability, boot times, link retrains, up/down rates, call drops, central processing unit ("CPU") loads, noise margins, device errors, connectivity, and traffic flow. User devices 210 may be deployed in, for example, residences, home offices, and/or businesses, such as a small office to a large enterprise. In some examples, a customer device management platform service (not shown in FIG. 2) running locally or through a cloud as a service may collect the behavior and/or line parameter data and send the collected data to performance monitoring module 220.

Performance monitoring module 220 are services that filter, elaborate, aggregate, and process the received behavior data and line parameter data. Performance monitoring services 220 may send the processed data to big data platform 230 in batches at determined intervals or streamed in real-time. In some examples, big data platform 230 may request the processed data from performance monitoring module 220 at defined intervals. In some examples, big data platform 230 is an information technology ("IT") solution that combines features and capabilities of several big data application and utilities within a single solution that enables organization in developing, deploying, operating and managing a big data infrastructure/environment. Big data platform 230 may include storage, servers, databases, big data management, business intelligence and other big data management utilities. Additionally, big data platform 230 may support custom development, querying, and integration with other systems.

Performance monitoring module 220 may also send the processed data for a temporal interval as a snap shot to predictive model creation module 240 to be used as a set of training data to construct predictive models relating to the processed data. In some examples, the snap shot data contains collected data from a subset of monitored user devices and/or communication lines. In some examples, the snap shot data is enriched with data gathered from other external sources (e.g., trouble ticketing, network inventory, and other network element systems). This external data may include behavior data for communication line users that may be historic behavior data or behavior data outside of what was sent from the user devices. The available information collected from user devices is used as input data through machine learning to discover possible correlations between known issues and behaviors of parameters which initially are not considered to be relevant.

Predictive model creation module 240 processes the collected snap shot data to discover correlations. For example, correlations may be determined between device issues and collected parameters from the user devices 210 some of which may not initially be considered relevant. Additionally, control associations may be determined from the snap shot data. As an example, features of users and their respective devices that open trouble tickets are associated to features of users without trouble tickets according to specific characteristics. In some examples, a correlation may show that trouble ticket opening probability grows with increasing of number of reboots, line's drops, or bitrate up /down-stream. In some examples, a correlation may show that trouble tickets decrease when CPU load, signal noise margin ratio upstream, or line availability increases. Predictive model creation module 240 may also normalize the snap shot data against calendar references in order to have a common time frame. Furthermore, predictive model creation module 240 may split the snap shot data into training and validations data sets.

Once the data has been processed, predictive model creation module 240 may use the processed data to create various predictive models (e.g., decisional trees, regressions, etc.), where the training data is used to train and shape the predictive models and validation data is used to validate the predictive models. A predictive model(s) is selected based on the model's performance against a set of criteria, such as key performance indicators ("KPIs") and thresholds, set by an administer and/or stakeholders. In some examples, a predictive model may be selected based a desired level of precision and/or accuracy in the predictive model's ability to select a likely event(s) within a certain temporal period, such the opening of a trouble ticket for the line or a network anomaly happening on the line. In some examples, a predictive model may be selected based on a desired level of precision and/or accuracy in the predictive model's ability to proactively and correctly identify any of the determined likely issues. In some examples, the predictive model creation module 240 may employ a segment modeling approach to determine the predictive model(s). A segment modeling approach may employ model specificity, most relevant communication line's KPIs, and focus on single or few segment behavior(s).

The predictive model(s) selected by predictive model creation module 240 is sent to the predictive model application module 250. The selected predictive model(s) is tuned according to the compiled processed data stored in big data platform 230. In some examples, the predictive model(s) is continually tuned in real time. In some examples, the predictive model(s) is tuned with data from big data platform 230 received in a configurable frequency.

In some examples, predictive model application module 250 employs static modeling to tune the selected predictive model(s). Static modeling updates models in a scheduled way, using a rolling window. For example, at time *t*ₙ, a model will create a predictive function which will be trained on data and information gathered in a previous fixed time window (e.g. the last 30 days), and will make a prediction on new data. At time *t*_{(*n*+1)}, the time window will have moved forward, so the older collected information delta may be ignored and data gathered within the current time window will be used. In this view, the system will store only data collected within the considered time window. With this approach, the model may be updated at a higher frequency.

In some examples, predictive model application module 250 employs Hierarchical Temporal Memory (HTM) modeling to tune the selected by predictive model(s). HTM modeling employees an HTM network. HTM networks may be trained on time varying data and rely on storing a large set of patterns and sequences using spatial and temporal pooling so that previous information is not lost.

By using HTM modeling, predictive model application module 250 is able to update the selected by predictive model(s) in near real time. Furthermore, predictive model application module 250 may update the selected by predictive model(s) at each new data set insertion using already gathered information about particular correlations, relations, and trends observed but without keeping the collected data in memory.

The predictive model application module 250 sends the tuned predictive model(s) to the scoring module 260. The scoring module 260 employs the tuned predictive model(s) to assign one or more risk scores to each monitored communication line. For example, respective risk scores can be assigned to respective issues under analysis for a single line. In some examples, a risk score may represent a likelihood of a particular event, such as opening a trouble tickct or a network anomaly or fault, happening with a rcspcctivc communication line within a determined temporal period. In some examples, risk scores may be assigned to each line representing a likelihood of an occurrence of a category of an event, such as opening a particular type trouble ticket (e.g., slow line, instable line) for a respective line during a temporal period. Scoring module 250 may enrich the predictive model(s) with business data gathered from other external sources such as customer support/ticketing systems, to construct more accurate risk scores for each communication line. The received business data may include, for example, average line traffic and user profile information. Scoring module 260 may continually update the risk scores as the predictive model is tuned with real-time data by predictive model application module 250.

Scoring module 260 sends the determined risk scores and respective communication line data to automatic recovery action module 270. Automatic recovery action module 270 selects and may trigger a recovery action based on the risk scores. For example, the risk score may indicate a likelihood of a service disruption on the respective communication line. The recovery action for a respective line may be performed or triggered automatically if a determined threshold for the risk score is met. In some examples, the threshold is determined based on the severity level of the potential event represented by the risk score. In some examples, the threshold is determined based on increasing classification precision of the potential events. In some examples, the threshold is determined based on increasing classification accuracy of the potential events.

In some examples, the recovery action may be selected or replaced by dividing the communication lines into subsets or groups and applying test recovery actions to the communication line with each subset. The effect that each test recovery actions has on a respective risk score can then be measured. An action score may be assigned to each test recovery action to determine a result percentage the reduction of the respective risk score after the test action has been performed. The actions ranking may be updated after each iteration to determine the recovery action with the higher success percentage.

A selected recovery action may be automatically executed in order to, for example, mitigate or prevent faults on the respective communication line or avoid a customer complaint. The recovery action may also include device reboots, upgrades, and inventory updates. The recovery action may enable customer service operators to proactively diagnose and solve an issue before an event occurs, such as opening a trouble ticket. In some examples, automatic recovery action module 270 may provide results of any performed recovery actions to predictive model application module 250 to further tune the predictive model(s).

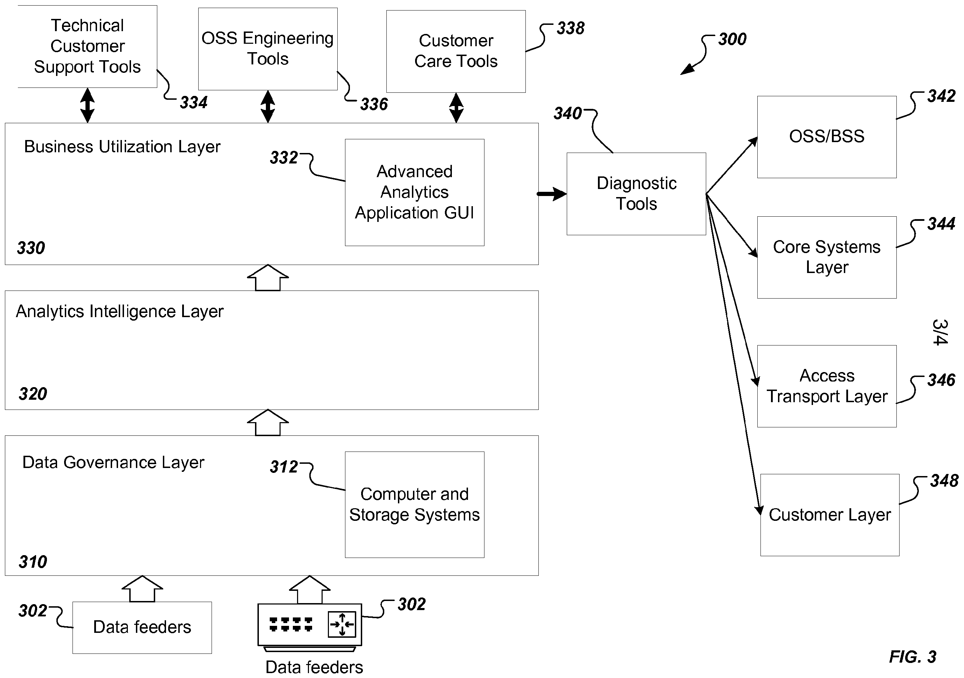

FIG. 3 depicts an example architecture 300 in accordance with implementations of the present disclosure, which may be employed to distribute a platform of the present disclosure, such as example platform 200. The example architecture 300 includes data governance layer 310, analytics intelligence layer 320, and business utilization layer 330. The included layers describe the logical groupings of functionality and components within the distributed platform and may be deployed through a server or group of servers within a network such as network 110 or as services provide via cloud based resources.

In the depicted example, the data governance layer 310 includes the overall management of the availability, usability, integrity, and security of the data employed with the system 300. Data governance layer 310 may include a defined set of procedures and a plan to execute those procedures as well as a defined set of owners or custodians of the data and procedures within system 300. Such procedures may specify accountability for various portions or aspects of the data, including its accuracy, accessibility, consistency, completeness, and updating. The set of procedures may include how the data is to be used by authorized personnel. Processes and/or services deployed with the data governance layer 310 may defined how the data is stored, archived, backed up, and protected. Such services may include, but are not limited to, performance monitoring module 220 and big data platform 230 of FIG. 2. In some examples, data governance layer 310 includes a combined computer and storage systems 312 such as Oracle Exadata Database Machine for running databases such as Oracle Database. Data governance layer may include data feeders 302, such as user devices 210 of FIG. 2. Data feeders 302 may provide data feeds in real-time to data governance layer 310. Example data feeders may also include, but are not limited to, data collections directly from the Customer Home Premise and various web feeds from the World Wide Web or other internal data sources.

Analytics intelligence layer 320 may provide a number of analytic working services that perform data analysis of the data received from data governance layer 310. The provided analytic working services may include, but are not limited to, predictive model creation module 240, predictive model application module 250, and scoring module 260 of FIG. 2. Data analysis may include a process of inspecting, cleansing, transforming, and modeling data through a process of machine learning with the goal of discovering useful information, suggesting conclusions, and supporting decision-making. Data analysis may be performed on data collected from the data feeders 302. The analyzed data may include, for example, data collected from user device records, trouble ticket records, and/or external analytical records. Once the data has been analyzed, analytic working tools (e.g., Statistical Analysis System ("SAS ") Enterprise Guide, SAS Enterprise Miner, and/or an open source library, such as, R) may be employed through the provided analytic working services to, for example, query/filter data, prep data for analysis, descriptive stats, charting, analyses such as regression methods, forecasting, and QC methods, SAS programming, create and run stored processes. Analytic working tools may also be employed to construct predictive models such as, for example, decision trees, neural networks, market basket analysis, predictive and descriptive modeling, and scoring models as described above.

Once the data have been analyzed and the models constructed within analytics intelligence layer 320, the models and processed information are passed to business utilization layer 330. Business utilization layer 330 may provide services, such as automatic recovery action module 270, that perform actions based on the tuned models and current and historic data. Business utilization layer 330, may also include services, such as advanced analytics application graphical user interface ("GUI") 332, to various users and stockholders to view and manipulate the modeled data. For example, advanced analytics application GUI 332 may provide views that access the determined risk score, customer profile data, determined customer behavior data, determined automatic actions, churn analysis (which may identify those customers that are most likely to discontinue using a product or service), determined deplorer tool data, application configurations, entity management, formulas, and/or user management.

Business utilization layer 330 may pass events predicted through the modeled data to various support application, such as technical customer support tool 334, OSS engineering tool 336, customer care tool 338 and/or diagnostic tools 340 (e.g., a trouble-shooting platform). Diagnostic tools 340 may pass the modeled data to operations support systems ("OSS")/Business support systems ("BSS") 342, core systems layer 344, access transport layer 346, and/or customer layer 348.

In some examples, one or more actions are automatically triggered for execution by the various backend tools by integrating pre-existing API's and webservices that the elements expose. In some examples, actions that are already performed by the backoffice and/or selfcare support are replicated by the backend tools. As described herein, such actions are automatically triggered automatically based on risk scores exceeding respective thresholds. Example actions include, without limitation, CPE remote reconfiguration, and DSLAM port reboots.

In some examples, operations support systems ("OSS") are program sets that may help a communications service provider monitor, control, analyze, and manage a telephone or computer network. OSS may support management functions such as network inventory, service provisioning, network configuration and fault management. Business support systems ("BSS") may include components that a service provider uses to run business operations toward customers. BSS may be used by a service provider to gain customer insight, compile real-time subscriptions, and introduce revenue generating services. Together, OSSs and BSSs may be used to support various end-to-end telecommunication services. Such telecommunication services may include, but are not limited to, telephone services, provisioning platforms, service assurance, digital subscriber line ("DSL") optimization, network manager platforms, trouble ticket management platforms, CPE manager platforms, customer and service inventory platforms, and network inventory platforms.

In some examples, diagnostic tools 340 may be employed to service a core system layer 344. Examples of such core system may include, but is not limited to, Internet Protocol television ("IPTV"), video on demand ("VoD"), voice over Internet Protocol ("VoIP"), digital video broadcasting - handheld ("DVB-H"), and various gaming services.

In some examples, diagnostic tools 340 may be employed to service access transport layer 346. Access transport layer 346, may include services such as a digital subscriber line access multiplexer ("DSLAM"), broadband remote access server ("BRAS"), authentication, authorization, and accounting (AAA) service. In some examples, DSLAM is a network device, often located in telephone exchanges, that connects multiple customer digital subscriber line (DSL) interfaces to a high-speed digital communications channel using multiplexing techniques. In some examples, a BRAS routes traffic to and from broadband remote access devices such as digital subscriber line access multiplexers (DSLAM) on an Internet service provider's (ISP) network. In some examples, AAA server provide a framework for intelligently controlling access to computer resources, enforcing policies, auditing usage, and providing the information necessary to bill for services. These combined processes may be considered important for effective network management and security.

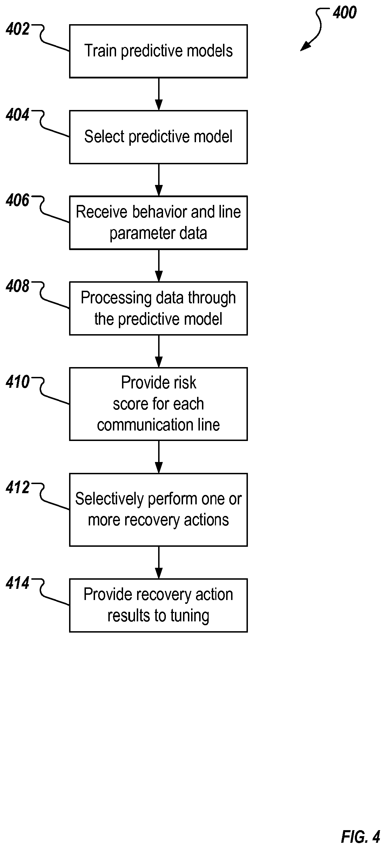

FIG. 4 depicts an example process 400 that can be executed in implementations of the present disclosure. In some examples, the example process 400 is provided using one or more computer-executable programs executed by one or more computing devices (e.g., the back-end system 108 of FIG. 1). The example process 400 can be executed to automatically trigger recovery actions in accordance with implementations of the present disclosure. At step 402, predictive models are trained using previously received behavior data and previously received line parameter dat. At step 404, a predictive model is selected based on performance against criteria, such as KPIs and thresholds, set by an administer and/or stakeholders. At step 406, behavior and line data is received from user devices, such as user devices 210 of FIG. 2, associated with a respective communication line. At step 408, the received behavior data and line parameter data is processed through the selected predictive model. At step 410, based on the processing, a risk score for each communication line representing a likelihood that a trouble ticket for the respective communication line would be opened within a determined temporal period is provided. At step 412, one or more recovery actions for a communication line is selectively performed based on a respective risk score to inhibit opening of at least one trouble ticket. At step 414, the results of the preformed recovery action are provided as feedback for future processing of the predictive model to determine subsequent risk scores.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products, i.e., one or more modules of computer program instructions encoded on a computer readable medium for execution by, or to control the operation of, data processing apparatus. The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question, *e.g.,* code that constitutes processor firmware, a protocol stack, a database management system, an operating system, or a combination of one or more of them. A propagated signal is an artificially generated signal, *e.g.,* a machine-generated electrical, optical, or electromagnetic signal that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (*e.g.,* one or more scripts stored in a markup language document), in a single file dedicated to the program in question, or in multiple coordinated files (*e.g.,* files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry, *e.g.,* an FPGA (field programmable gate array) or an ASIC (application specific integrated circuit).

Processors suitable for the execution of a computer program include, by way of example, both general and special purpose microprocessors, and any one or more processors of any appropriate kind of digital computer. Generally, a processor will receive instructions and data from a read only memory or a random access memory or both. Elements of a computer can include a processor for performing instructions and one or more memory devices for storing instructions and data. Generally, a computer will also include, or be operatively coupled to receive data from or transfer data to, or both, one or more mass storage devices for storing data, *e.g.,* magnetic, magneto optical disks, or optical disks. However, a computer need not have such devices. Moreover, a computer may be embedded in another device, *e.g.,* a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory may be supplemented by, or incorporated in, special purpose logic circuitry.

To provide for interaction with a user, implementations may be realized on a computer having a display device, e.g., a CRT (cathode ray tube) or LCD (liquid crystal display) monitor, for displaying information to the user and a keyboard and a pointing device, e.g., a mouse or a trackball, by which the user may provide input to the computer. Other kinds of devices may be used to provide for interaction with a user as well; for example, feedback provided to the user may be any appropriate form of sensory feedback, e.g., visual feedback, auditory feedback, or tactile feedback; and input from the user may be received in any appropriate form, including acoustic, speech, or tactile input.

Implementations may be realized in a computing system that includes a back end component, e.g., as a data server, or that includes a middleware component, e.g., an application server, or that includes a front end component, e.g., a client computer having a graphical user interface or a Web browser through which a user may interact with an implementation, or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN"), e.g., the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

The invention is defined in the appended claims.

## Claims

1. A computer-implemented method comprising:
receiving behavior data and line parameter data from a plurality of user devices (106, 107; 210) in real-time associated with a plurality of communication lines (130, 132), each user device being associated with a respective communication line, wherein the behavior data includes information regarding bandwidth usage and utilization time frames, and the line parameter data includes information regarding the respective communication line and the devices that access the respective communication line including device availability, line availability, boot times, link retrains, bit rates upstream and downstream, central processing unit load and signal noise margin ratio;
training a predictive model using a set of training data to discover correlations, wherein the training data is received behavior data and received line parameter data for a subset of the plurality of user devices and a subset of the plurality of communication lines for a particular temporal interval, and wherein at least one correlation indicates that the probability of a network anomaly grows with an increasing number of reboots, line drops or bitrate upstream/downstream, and wherein at least one correlation indicates that the probability of a network anomaly decreases when central processing unit load, signal noise margin ratio or line availability increases;
processing received behavior data and line parameter data through the predictive model;
continually tuning the predictive model;
providing a risk score for each communication line of the plurality of communication lines based on the processing, each risk score representing a likelihood of a network anomaly for the respective communication line would occur within a determined temporal period;
selectively performing test recovery actions for multiple communication lines based on respective risk scores, the test recovery actions being performed to inhibit occurrence of network anomalies, wherein selectively performing the test recovery actions includes dividing communication lines from the plurality of communication lines into subsets and applying different test recovery actions to different subsets of communications lines, wherein the test recovery actions include device reboots, upgrades and inventory updates, and wherein the communication lines are ordered according to the respective risk scores, and wherein the test recovery actions are selectively performed based on the respective risk score meeting a determined threshold; and
measuring an effect that each test recovery action has on a respective risk score for respective communication line.

2. The method of claim 1, further comprising:
selecting the predictive model based on an analysis of various predictive models trained with the set of training data.

3. The method of any of the preceding claims, wherein the predictive model is tuned based on static modeling.

4. The method of any of the preceding claims, wherein the predictive model is tuned based on hierarchical temporal memory (HTM) modeling.

5. The method of any of the preceding claims, wherein the set of training data comprises data received from one or more external sources.

6. The method of any of the preceding claims, wherein performing the one or more test recovery actions for a communication line reduces the respective risk score.

7. Computer program instructions which, when executed by one or more processors, cause the one or more processors to perform the method of one or more of claims 1 to 6.

8. A system (200; 300), comprising:
one or more processors; and
a computer-readable storage device coupled to the one or more processors and having instructions stored thereon which, when executed by the one or more processors, cause the one or more processors to perform operations comprising:
receiving behavior data and line parameter data from a plurality of user devices (106, 107; 210) in real-time associated with a plurality of communication lines (130, 132), each user device being associated with a respective communication line, wherein the behavior data includes information regarding bandwidth usage and utilization time frames, and the line parameter data includes information regarding the respective communication line and the devices that access the respective communication line including device availability, line availability, boot times, link retrains, bit rates upstream and downstream, central processing unit load and signal noise margin ratio;
training a predictive model using a set of training data to discover correlations, wherein the training data is received behavior data and received line parameter data for a subset of the plurality of user devices and a subset of the plurality of communication lines for a particular temporal interval, and wherein at least one correlation indicates that the probability of a network anomaly grows with an increasing number of reboots, line drops or bitrate upstream/downstream, and wherein at least one correlation indicates that the probability of a network anomaly decreases when central processing unit load, signal noise margin ratio or line availability increases;
processing received behavior data and line parameter data through the predictive model;
continually tuning the predictive model;
providing a risk score for each communication line of the plurality of communication lines based on the processing, each risk score representing a likelihood of a network anomaly for the respective communication line would occur within a determined temporal period; and
selectively performing test recovery actions for multiple communication lines based on respective risk scores, the test recovery actions being performed to inhibit
occurrence of network anomalies, wherein selectively performing the test recovery actions includes dividing communication lines from the plurality of communication lines into subsets and applying different test recovery actions to different subsets of communications lines, wherein the test recovery actions include device reboots, upgrades and inventory updates, and wherein the communication lines are ordered according to the respective risk scores, and wherein the test recovery actions are selectively performed based on the respective risk score meeting a determined threshold; and
measuring an effect that each test recovery action has on a respective risk score for respective communication line.

9. The system of claim 9, wherein the instructions are configured to cause, when executed by the one or more processors, the method of one or more of claims 2 to 6 to be performed.

## Patentansprüche

1. Computer-implementiertes Verfahren, aufweisend:
das Empfangen von Verhaltensdaten und Leitungsparameterdaten von einer Vielzahl von Benutzervorrichtungen (106, 107; 210) in Echtzeit, die einer Vielzahl von Kommunikationsleitungen (130, 132) zugeordnet sind, wobei jede Benutzervorrichtung einer jeweiligen Kommunikationsleitung zugeordnet ist, und wobei die Verhaltensdaten Informationen bezüglich der Bandbreitennutzung und der Nutzungszeitrahmen beinhalten und die Leitungsparameterdaten Informationen bezüglich der jeweiligen Kommunikationsleitung und der Vorrichtungen beinhalten, die auf die jeweilige Kommunikationsleitung zugreifen, einschließlich der Vorrichtungsverfügbarkeit, der Leitungsverfügbarkeit, der Boot-Zeiten, der Link-Retrains, des Bitraten Upstreams und Downstreams, der Last der zentralen Verarbeitungseinheit und des Signalrauschabstandverhältnisses;
das Trainieren eines Vorhersagemodells unter Verwendung eines Satzes von Trainingsdaten, um Korrelationen zu entdecken, wobei die Trainingsdaten empfangene Verhaltensdaten und empfangene Leitungsparameterdaten für eine Teilmenge der Vielzahl von Benutzervorrichtungen und eine Teilmenge der Vielzahl von Kommunikationsleitungen für ein bestimmtes Zeitintervall sind, und wobei mindestens eine Korrelation anzeigt, dass die Wahrscheinlichkeit einer Netzwerkanomalie mit einer zunehmenden Anzahl von Neustarts, Leitungsabbrüchen oder einer Bitrate Upstream/Downstream zunimmt, und wobei mindestens eine Korrelation anzeigt, dass die Wahrscheinlichkeit einer Netzwerkanomalie abnimmt, wenn die Last der zentralen Verarbeitungseinheit, das Signalrauschabstandverhältnis oder die Leitungsverfügbarkeit zunimmt;
das Verarbeiten empfangener Verhaltensdaten und Leitungsparameterdaten durch das Vorhersagemodell;
das kontinuierliche Abstimmen des Vorhersagemodells;
das Bereitstellen einer Risikowertung für jede Kommunikationsleitung der Vielzahl von Kommunikationsleitungen auf der Grundlage der Verarbeitung, wobei jede Risikowertung eine Wahrscheinlichkeit darstellt, dass eine Netzwerkanomalie für die jeweilige Kommunikationsleitung innerhalb einer bestimmten zeitlichen Periode auftreten würde;
das selektive Durchführen von Testwiederherstellungsaktionen für mehrere Kommunikationsleitungen auf der Grundlage jeweiliger Risikowertungen, wobei die Testwiederherstellungsaktionen durchgeführt werden, um das Auftreten von Netzwerkanomalien zu verhindern, wobei das selektive Durchführen der Testwiederherstellungsaktionen das Aufteilen von Kommunikationsleitungen aus der Vielzahl von Kommunikationsleitungen in Untergruppen und das Anwenden verschiedener Testwiederherstellungsaktionen auf verschiedene Untergruppen von Kommunikationsleitungen aufweist und wobei die Testwiederherstellungsaktionen Vorrichtung-Neustarts, Upgrades und Bestandsaktualisierungen aufweisen, und wobei die Kommunikationsleitungen gemäß den jeweiligen Risikowertungen geordnet sind, und wobei die Testwiederherstellungsaktionen auf der Grundlage der jeweiligen Risikowertung selektiv durchgeführt werden, die einen bestimmten Schwellenwert erreicht; und
das Messen einer Auswirkung, die jede Testwiederherstellungsaktion auf eine jeweilige Risikowertung für die jeweilige Kommunikationsleitung hat.

2. Verfahren nach Anspruch 1, **dadurch gekennzeichnet, dass** das Verfahren ferner aufweist:
das Auswählen des Vorhersagemodells auf der Grundlage einer Analyse der unterschiedlichen Vorhersagemodelle, die mit einem Satz von Trainingsdaten trainiert wurden.

3. Verfahren nach einem der vorhergehenden Ansprüche, **dadurch gekennzeichnet, dass** das Vorhersagemodell auf der Grundlage von statischer Modellierung abgestimmt ist.

4. Verfahren nach einem der vorhergehenden Ansprüche, **dadurch gekennzeichnet, dass** das Vorhersagemodell auf der Grundlage einer hierarchischen Zeitspeicher (HTM) Modellierung abgestimmt ist.

5. Verfahren nach einem der vorhergehenden Ansprüche, **dadurch gekennzeichnet, dass** der Satz an Trainingsdaten Daten aufweist, die von einer oder mehreren externen Quellen empfangen wurden.

6. Verfahren nach einem der vorhergehenden Ansprüche, **dadurch gekennzeichnet, dass** das Durchführen der einem oder mehreren Testwiederherstellungsaktionen für eine Kommunikationsleitung die jeweilige Risikobewertung senkt.

7. Computerprogrammanweisungen, die, wenn diese von einem oder mehreren Prozessoren ausgeführt werden, den einen oder die mehreren Prozessoren veranlassen, das Verfahren nach einem oder mehreren der Ansprüche 1 bis 6 durchzuführen.

8. System (200; 300), aufweisend:
einen oder mehrere Prozessoren; und
eine mit dem einen oder den mehreren Prozessoren verbundene, computerlesbare Speichervorrichtung, die Anweisungen darauf gespeichert hat, die, wenn diese durch den einen oder die mehreren Prozessoren ausgeführt werden, den einen oder die mehreren Prozessoren veranlassen, Tätigkeiten auszuführen, die aufweisen:
das Empfangen von Verhaltensdaten und Leitungsparameterdaten von einer Vielzahl von Benutzervorrichtungen (106, 107; 210) in Echtzeit, die einer Vielzahl von Kommunikationsleitungen (130, 132) zugeordnet sind, wobei jede Benutzervorrichtung einer jeweiligen Kommunikationsleitung zugeordnet ist, und wobei die Verhaltensdaten Informationen bezüglich der Bandbreitennutzung und der Nutzungszeitrahmen beinhalten und die Leitungsparameterdaten Informationen bezüglich der jeweiligen Kommunikationsleitung und der Vorrichtungen beinhalten, die auf die jeweilige Kommunikationsleitung zugreifen, einschließlich der Vorrichtungsverfügbarkeit, der Leitungsverfügbarkeit, der Boot-Zeiten, der Link-Retrains, des Bitraten Upstreams und Downstreams, der Last der zentralen Verarbeitungseinheit und des Signalrauschabstandverhältnisses;
das Trainieren eines Vorhersagemodells unter Verwendung eines Satzes von Trainingsdaten, um Korrelationen zu entdecken, wobei die Trainingsdaten empfangene Verhaltensdaten und empfangene Leitungsparameterdaten für eine Teilmenge der Vielzahl von Benutzervorrichtungen und eine Teilmenge der Vielzahl von Kommunikationsleitungen für ein bestimmtes Zeitintervall sind, und wobei mindestens eine Korrelation anzeigt, dass die Wahrscheinlichkeit einer Netzwerkanomalie mit einer zunehmenden Anzahl von Neustarts, Leitungsabbrüchen oder einer Bitrate Upstream/Downstream zunimmt, und wobei mindestens eine Korrelation anzeigt, dass die Wahrscheinlichkeit einer Netzwerkanomalie abnimmt, wenn die Last der zentralen Verarbeitungseinheit, das Signalrauschabstandverhältnis oder die Leitungsverfügbarkeit zunimmt;
das Verarbeiten empfangener Verhaltensdaten und Leitungsparameterdaten durch das Vorhersagemodell;
das kontinuierliche Abstimmen des Vorhersagemodells;
das Bereitstellen einer Risikowertung für jede Kommunikationsleitung der Vielzahl von Kommunikationsleitungen auf der Grundlage der Verarbeitung, wobei jede Risikowertung eine Wahrscheinlichkeit darstellt, dass eine Netzwerkanomalie für die jeweilige Kommunikationsleitung innerhalb einer bestimmten zeitlichen Periode auftreten würde;
das selektive Durchführen von Testwiederherstellungsaktionen für mehrere Kommunikationsleitungen auf der Grundlage jeweiliger Risikowertungen, wobei die Testwiederherstellungsaktionen durchgeführt werden, um das Auftreten von Netzwerkanomalien zu verhindern, wobei das selektive Durchführen der Testwiederherstellungsaktionen das Aufteilen von Kommunikationsleitungen aus der Vielzahl von Kommunikationsleitungen in Untergruppen und das Anwenden verschiedener Testwiederherstellungsaktionen auf verschiedene Untergruppen von Kommunikationsleitungen aufweist und wobei die Testwiederherstellungsaktionen Vorrichtung-Neustarts, Upgrades und Bestandsaktualisierungen aufweisen, und wobei die Kommunikationsleitungen gemäß den jeweiligen Risikowertungen geordnet sind, und wobei die Testwiederherstellungsaktionen auf der Grundlage der jeweiligen Risikowertung selektiv durchgeführt werden, die einen bestimmten Schwellenwert erreicht; und
das Messen einer Auswirkung, die jede Testwiederherstellungsaktion auf eine jeweilige Risikowertung für die jeweilige Kommunikationsleitung hat.

9. System nach Anspruch 9, **dadurch gekennzeichnet, dass** die Anweisungen konfiguriert sind, um die Durchführung des Verfahrens nach einem oder mehreren der Ansprüche 2 bis 6 zu veranlassen, wenn die Anweisungen von dem einen oder den mehreren Prozessoren ausgeführt werden.

## Revendications

1. Procédé mis en œuvre par ordinateur comprenant les étapes consistant à :
recevoir des données de comportement et des données de paramètres de ligne d'une pluralité de dispositifs utilisateurs (106, 107 ; 210) en temps réel associées à une pluralité de lignes de communication (130, 132), chaque dispositif utilisateur étant associé à une ligne de communication respective,
dans lequel les données de comportement comprennent des informations concernant l'utilisation de la bande passante et des périodes d'utilisation, et les données de paramètres de ligne comprennent des informations concernant la ligne de communication respective et les dispositifs qui accèdent à la ligne de communication respective, y compris une disponibilité du dispositif, une disponibilité de la ligne, des temps de démarrage, des recyclage de liaison, des débits binaires en amont et en aval, une charge de l'unité centrale et un rapport de marge de bruit de signal ;
former un modèle prédictif à l'aide d'un ensemble de données d'apprentissage pour découvrir des corrélations, dans lequel les données d'apprentissage sont des données de comportement reçues et des données de paramètres de ligne reçues pour un sous-ensemble de dispositifs de la pluralité de dispositifs utilisateurs et un sous-ensemble de lignes de la pluralité de lignes de communication pour un intervalle temporel particulier, et dans lequel au moins une corrélation indique que la probabilité d'une anomalie de réseau augmente avec un nombre croissant de redémarrages, de pertes de ligne ou de débit montant/descendant, et dans lequel au moins une corrélation indique que la probabilité d'une anomalie de réseau diminue lorsque la charge de l'unité de traitement centrale, un rapport de marge de bruit de signal ou la disponibilité de ligne augmente ;
traiter les données de comportement et les données de paramètres de ligne reçues par l'intermédiaire du modèle prédictif ;
ajuster en continu le modèle prédictif ;
fournir un score de risque pour chaque ligne de communication d'une pluralité de lignes de communication sur la base du traitement, chaque score de risque représentant une probabilité qu'une anomalie de réseau pour la ligne de communication respective se produise dans une période de temps déterminée ;
exécuter de manière sélective des actions de récupération test pour plusieurs lignes de communication sur la base de scores de risque respectifs, les actions de récupération test étant exécutées pour empêcher l'apparition d'anomalies de réseau, dans lequel l'exécution sélective des actions de récupération test comprend la division des lignes de communication de la pluralité de lignes de communication en sous-ensembles et l'application de différentes actions de récupération test à différents sous-ensembles de lignes de communication, dans lequel les actions de récupération test comprennent des redémarrages de dispositifs, des mises à niveau et des mises à jour d'inventaire, et dans lequel les lignes de communication sont ordonnées en fonction des scores de risque respectifs, et dans lequel les actions de récupération test sont exécutées de manière sélective en fonction du fait que le score de risque respectif atteint un seuil déterminé ; et
mesurer un effet que chaque action de récupération test a sur un score de risque respectif pour la ligne de communication respective.

2. Procédé selon la revendication 1, comprenant en outre l'étape consistant à :
sélectionner le modèle prédictif sur la base d'une analyse de divers modèles prédictifs formés avec l'ensemble de données d'apprentissage.

3. Procédé selon l'une quelconque des revendications précédentes, dans lequel le modèle prédictif est ajusté sur la base d'une modélisation statique.

4. Procédé selon l'une quelconque des revendications précédentes, dans lequel le modèle prédictif est ajusté sur la base d'une modélisation de mémoire temporelle hiérarchique (HTM).

5. Procédé selon l'une quelconque des revendications précédentes, dans lequel l'ensemble de données d'apprentissage comprend des données reçues d'une ou plusieurs sources externes.

6. Procédé selon l'une quelconque des revendications précédentes, dans lequel l'exécution desdits une ou plusieurs actions de récupération test pour une ligne de communication réduit le score de risque respectif.

7. Instructions de programme informatique qui, lorsqu'elles sont exécutées par un ou plusieurs processeurs, amènent lesdits un ou plusieurs processeurs à exécuter le procédé selon une ou plusieurs des revendications 1 à 6.

8. Système (200 ; 300), comprenant :
un ou plusieurs processeurs ; et
un dispositif de stockage lisible par ordinateur couplé auxdits un ou plusieurs processeurs et sur lequel sont stockées des instructions qui, lorsqu'elles sont exécutées par lesdits un ou plusieurs processeurs, amènent lesdits un ou plusieurs processeurs à effectuer des opérations comprenant les étapes consistant à :
recevoir des données de comportement et des données de paramètres de ligne d'une pluralité de dispositifs utilisateurs (106, 107 ; 210) en temps réel associées à une pluralité de lignes de communication (130, 132), chaque dispositif utilisateur étant associé à une ligne de communication respective,
dans lequel les données de comportement comprennent des informations concernant l'utilisation de la bande passante et les périodes d'utilisation, et les données de paramètres de ligne comprennent des informations concernant la ligne de communication respective et les dispositifs qui accèdent à la ligne de communication respective, y compris une disponibilité du dispositif, une disponibilité de la ligne, des temps de démarrage, des recyclages de liaison, des débits binaires montant et descendant, une charge de l'unité centrale et un rapport de marge de bruit de signal ;
former un modèle prédictif à l'aide d'un ensemble de données d'apprentissage pour découvrir des corrélations, les données d'apprentissage étant des données de comportement reçues et des données de paramètres de ligne reçues pour un sous-ensemble de la pluralité de dispositifs utilisateurs et un sous-ensemble de la pluralité de lignes de communication pour un intervalle temporel particulier, et dans lequel au moins une corrélation indique que la probabilité d'une anomalie de réseau augmente avec un nombre croissant de redémarrages, de coupures de ligne ou de débit montant/descendant, et dans lequel au moins une corrélation indique que la probabilité d'une anomalie de réseau diminue lorsque la charge de l'unité centrale de traitement, le rapport de marge de bruit de signal ou la disponibilité de la ligne augmentent ;
traiter les données de comportement et les données de paramètres de ligne reçues par l'intermédiaire du modèle prédictif ;
ajuster en continu le modèle prédictif ;
fournir un score de risque pour chaque ligne de communication d'une pluralité de lignes de communication sur la base du traitement, chaque score de risque représentant une probabilité qu'une anomalie de réseau pour la ligne de communication respective se produise dans une période de temps déterminée ; et
exécuter de manière sélective des actions de récupération test pour plusieurs lignes de communication sur la base de scores de risque respectifs, les actions de récupération test étant exécutées pour empêcher l'apparition d'anomalies de réseau, l'exécution sélective des actions de récupération test comprenant la division des lignes de communication de la pluralité de lignes de communication en sous-ensembles et l'application de différentes actions de récupération test à différents sous-ensembles de lignes de communication, dans lequel les actions de récupération test comprennent des redémarrages de dispositifs, des mises à niveau et des mises à jour d'inventaire, et dans lequel les lignes de communication sont ordonnées en fonction des scores de risque respectifs, et dans lequel les actions de récupération test sont exécutées de manière sélective en fonction du fait que le score de risque respectif atteint un seuil déterminé ; et
mesurer un effet que chaque action de récupération test a sur un score de risque respectif pour la ligne de communication respective.

9. Système selon la revendication 9, dans lequel les instructions sont configurées pour provoquer, lorsqu'elles sont exécutées par lesdits un ou plusieurs processeurs, la réalisation du procédé selon une ou plusieurs des revendications 2 à 6.
